# EUROPEAN PATENT APPLICATION

(11) **EP 3 714 746 A1**
(43) Date of publication of application: **30.09.2020**
(21) Application number: 20150808.2
(22) Date of filing: 08.01.2020
(51) Int. Cl.: A47J 31/50, A47J 31/06

(54) **INTELLIGENT EXTRACTION BEVERAGE COOLER**

(30) Priority: 28.03.2019 CN 201920402136 U
(71) Applicant: Chang, Wen-Cheng, Yuanlin City, Changhua County 510 (CN)
(72) Inventor: Chang, Wen-Cheng, Yuanlin City, Changhua County 510 (CN)
(74) Representative: Handsome I.P. Ltd

(57) **Abstract**

An intelligent extraction beverage cooler comprises a casing (1) and a heating cylinder (2) installed in the casing (1), a hot liquid container (3), a cold liquid container (4), a pot lid (5), a pot lid lifting mechanism (6), and a cooling system with multiple connecting pipes. The pot lid lifting mechanism (6) drives the pot lid (5) to lower into the hot liquid container (3) along with an ingredient bag. The heating cylinder (2) heats up the liquid and transports it to the hot liquid container (3). The ingredient bag is extracted to produce a hot beverage which is made into an iced liquid beverage by the cooling system without affecting taste thereof. This avoids bitterness or rancid taste of the hot liquid beverage. Additionally, the pot lid lifting mechanism (6) drives the pot lid (5) to open for convenience of putting in the ingredient bag.

## Description

### FIELD OF THE INVENTION

The invention relates to beverage cooling and, in particular, to an intelligent extraction beverage cooler.

### BACKGROUND OF THE INVENTION

In the beverage manufacturing industry, the store staff usually adds to hot water various ingredients (coffee, milk, tea, saccharin, salt, etc.) to make special hot liquid drinks of specific flavors in advance. It is then added with ice to make it an iced liquid drink according to the requests of customers. A drawback of this cooling method is that the taste of the beverage is directly affected by the amount of added ice and the skill of the service staff. If too much ice is added, the beverage will be diluted and the taste will change. If too little ice is added, the temperature does not drop and the beverage may taste too strong. And with the development of the delivery industry, more people do not go directly to the store but prefer to consume drinks by ordering take-outs. However, the delivery time is uncertain. Then the melting speed of ice cubes will also affect the taste of the beverage, which may leave bad impressions to the consumers. In addition, the lid of the existing tea maker is in a horizontal state after being raised. In this case, the straight-line distance from the top of the pot lid to the top of the container is constant and small. This makes it difficult to put in ingredients and to observe the condition inside the container.

### SUMMARY OF THE INVENTION

In view of the foregoing, the invention provides an intelligent extraction beverage cooler, which can directly make ice beverages without the need to add additional ice cubes.

The disclosed intelligent extraction beverage cooler includes a casing and a heating cylinder, a hot liquid container, a cold liquid container, a pot lid, a pot lid lifting mechanism, a cooling system, and a plurality of connecting pipes installed in the casing. The heating cylinder heats up the liquid therein, and transports the heated liquid through the connecting pipes to the hot liquid container. The top of the hot liquid container is closed with the pot lid. The bottom of the pot lid is hooked with an ingredient bag. The pot lid lifting mechanism drives the pot lid to rise from and fall into the hot liquid in the hot liquid container. After waiting for a predetermined time, a hot beverage is extracted and is cooled by the cooling system into an iced beverage, which is then output to the cold liquid container.

As a preferred embodiment, the disclosed intelligent extraction beverage cooler further includes an intelligent operation panel installed on the surface of the casing. The intelligent operation panel includes a basic parameter setting module, an extraction setting module, and an automatic cleaning control module. The basic parameter setting module is used to set a date, a machine number, a heating temperature, a cooling temperature, and a cooling time. The extraction setting module is used to set an ingredient bag type, an ingredient bag weight, an extraction temperature, and an extraction mode. The automatic cleaning control module is used to control whether to enter the cleaning mode.

As a preferred embodiment of the disclosed intelligent extracting beverage cooler, the pot lid lifting mechanism includes a mounting shell, a connecting rod, a guide sleeve, a motor mounting plate, a motor and a gear. The top of the pot lid is hinged with the connecting rod, which is movably installed in the guide sleeve. The guide sleeve is installed at the bottom of the mounting shell, and the bottom of the guide sleeve is provided with an inclined surface. The motor mounting plate is installed inside the mounting shell, and the motor is mounted on one side of the motor mounting plate. The gear is mounted on the output shaft of the motor. The upper side of the connecting rod is provided with a gear-shaped groove matching with the gear. The upper end of the connecting rod penetrates into the mounting shell to engage the gear. The motor drives the pot lid to rise with the help of the gear and the connecting rod. The pot lid surface is in contact with the inclined surface to realize an inclined opening of the pot lid.

As a preferred embodiment of the disclosed intelligent extracting beverage cooler, the cooling system includes a cooling jacket and a heat exchanger. The cooling jacket has a double-layered tube structure, with the inner tube thereof used to transport hot beverages and the outer tube thereof used to transport cooling water. The cooling water cools the hot beverage in the inner tube once to form a cold beverage, which then reaches the cold liquid container through a connecting pipe. The cold liquid container communicates with the heat exchanger through a connecting pipe. The heat exchanger circulates to cool the cold liquid for a second time to form an iced beverage.

As a preferred embodiment of the disclosed intelligent extraction beverage cooler, the heat exchanger includes an air compressor, an evaporator, and a condenser.

As a preferred embodiment of the disclosed intelligent extraction beverage cooler, the cooling sleeve is arranged in a disc shape.

As a preferred embodiment of the disclosed intelligent extraction beverage cooler, a water level probe and a temperature probe are installed in the heating cylinder, the hot liquid container, and the cold liquid container, respectively.

The beneficial effects of the invention include the following. The pot lid lifting mechanism drives the pot lid to fall into the hot liquid container along with the ingredient bag. The heating cylinder heats up the liquid and transports the hot liquid to the hot liquid container. The ingredient bag is immersed in the hot liquid to render a hot beverage. The hot beverage is cooled by the cooling system to produce an old liquid beverage of desired temperature. In contrast to the prior art, the invention does not need the use of additional ice cubes. It can be made highly automatic, without much dependence on the skill level of the personnel. The invention does not dilute the beverage too much or make the beverage too strong. It therefore produces a delicious iced liquid drink of a delicious flavor and taste. The aroma of the liquid beverages is kept in at low temperatures, preventing the bitterness and rancidity of high-temperature liquid beverages. The invention thus brings consumers a better experience and meets their needs. In addition, the pot lid lifting mechanism drives the lid to tilt and open, convenient for putting in ingredients.

### BRIEF DESCRIPTION OF THE DRAWINGS

FIG. 1 is a perspective view of the invention;
FIG. 2 is an exploded view of the invention;
FIG. 3 is a flowchart block diagram of the invention;
FIG. 4 is a schematic view of the basic parameter setting interface of the intelligent operation panel according to the invention;
FIG. 5 is a schematic view of the ingredient bag type selection setting interface of the intelligent operation panel according to the invention;
FIG. 6 is a schematic view of the ingredient bag parameter setting interface of the intelligent operation panel according to the invention;
FIG. 7 is a perspective view of the pot lid when it opens in a tilted fashion according to the invention;
FIG. 8 is a schematic structural view when the pot lid is in contact with the guide sleeve according to the invention;
FIG. 9 is a perspective view of the guide sleeve of the invention;
FIG. 10 is an exploded view of the pot lid lifting mechanism of the invention;
FIG. 11 is a schematic view showing the cooperative combination of the motor, the gear, and the connecting rod according to the pot lid lifting mechanism of the invention; and
FIG. 12 is a schematic structural view of the cooling jacket according to the invention.

### DESCRIPTION OF THE PREFERRED EMBODIMENTS

The aforementioned and other objectives and advantages of this disclosure will become clearer in light of the following detailed description of an illustrative embodiment of this invention described in connection with the drawings.

In the description of this specification, terms such as 'center', 'upper', 'lower', 'left', 'right', 'vertical', 'horizontal', 'inner', 'outer' refer to the orientation or positional relationship shown in the drawings. They are used only for the convenience of describing the invention and simplifying the description. They do not indicate or imply that the indicated location or element must have a specific orientation, or be operated in a specific orientation. They therefore cannot be construed to limit the scope of the invention.

It should also be noted that unless otherwise specified or defined, terms such as 'install', 'connect', and 'couple' should be understood in a broad sense. For example, a connection may be a fixed connection, a collapsible connection, or an integral connection. It can be a mechanical or electrical connection. It can be a directly connection, or an indirect connection through an intermediate medium. Moreover, the connection may even be an internal communication between two elements. For those skilled in the art, the specific meanings of the above-mentioned terms in is specification can be understood according to practical situations.

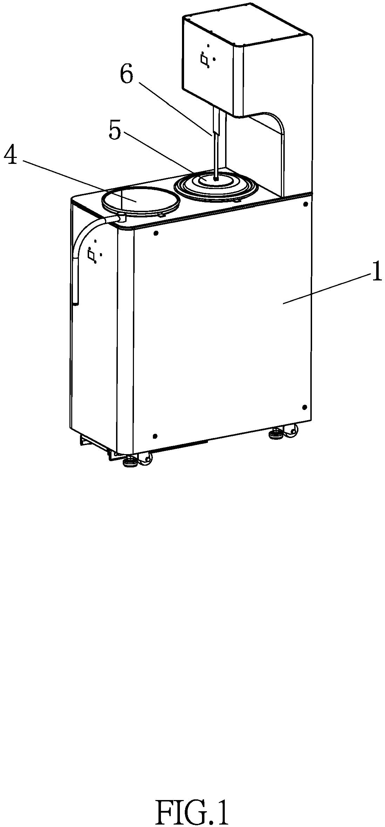

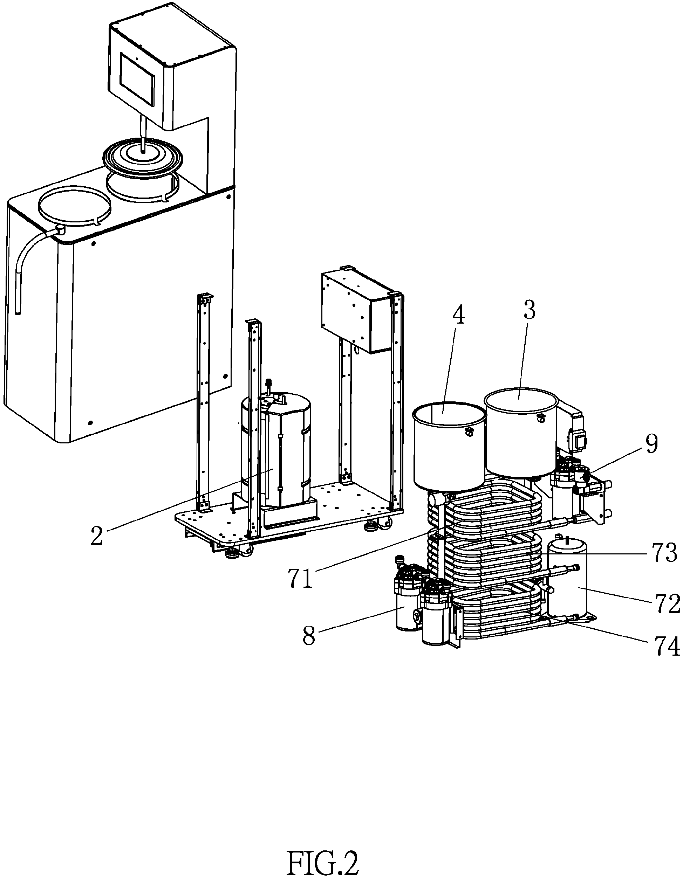

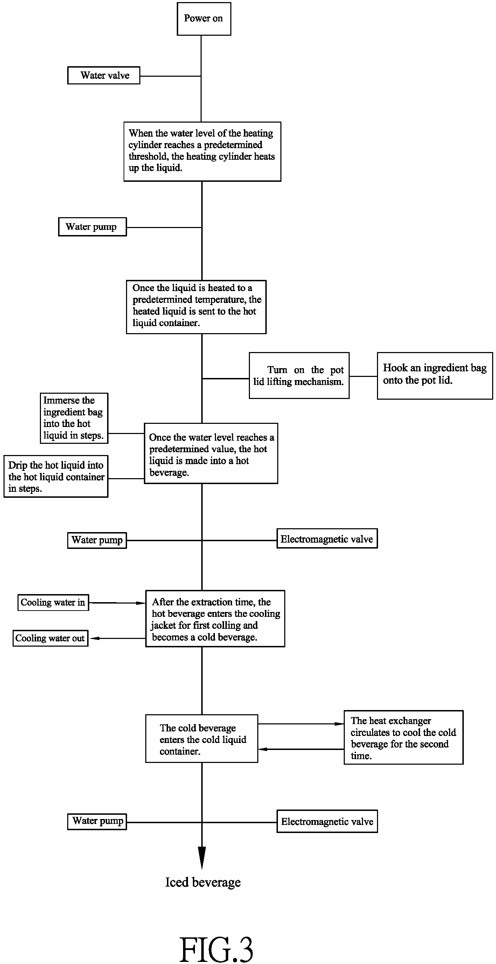

As shown in FIGS. 1 to 3, the disclosed intelligent extraction beverage cooler includes a casing 1 and a heating cylinder 2, a hot liquid container 3, a cold liquid container 4, a pot lid 5, a pot lid lifting mechanism 6, a cooling system and multiple connecting pipes (not shown as soft water pipes) installed in the casing 1. The heating cylinder 2 heats up the liquid and transports the heated liquid to the hot liquid container 3 through a connecting pipe. The top of the hot liquid container 3 is covered by the pot lid 5, whose bottom is hooked with an ingredient bag (the ingredient bag may contain oolong tea, Pu'er tea, black tea, green tea, etc.). The pot lid lifting mechanism 6 drives the pot lid 5 to raise or lower the ingredient bag up or into the hot liquid in the hot liquid container 3. After waiting for a predetermined time, a hot beverage is then extracted. The hot beverage is cooled by the cooling system into an iced beverage and output to the cold liquid container. The liquid delivery pipeline is installed with a water pump 8 and a solenoid valve 9, with the former providing power while the latter controlling the on and off of the pipeline. In addition, a bottom plate is installed at the bottom of the casing 1, and caster wheels are installed on the bottom plate to facilitate the movement of the machine.

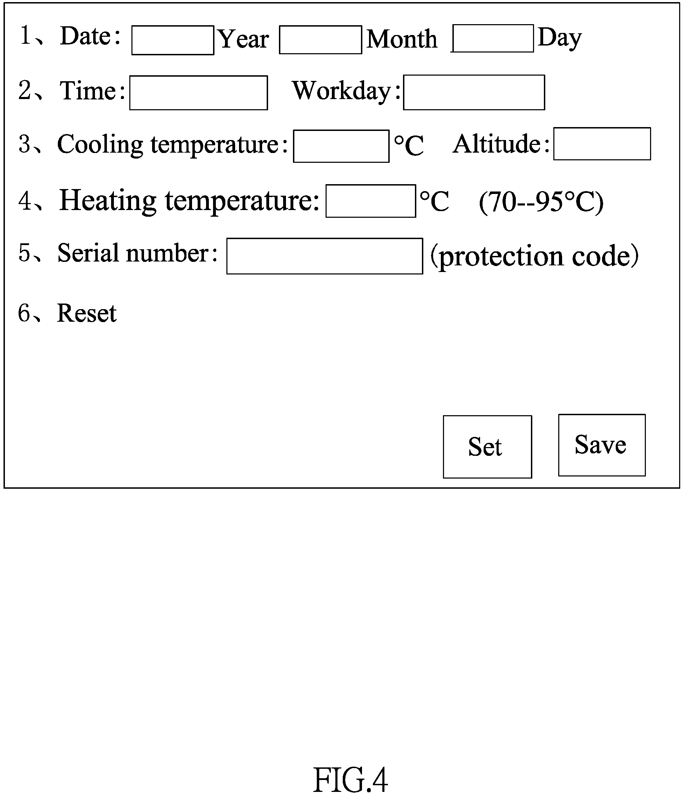

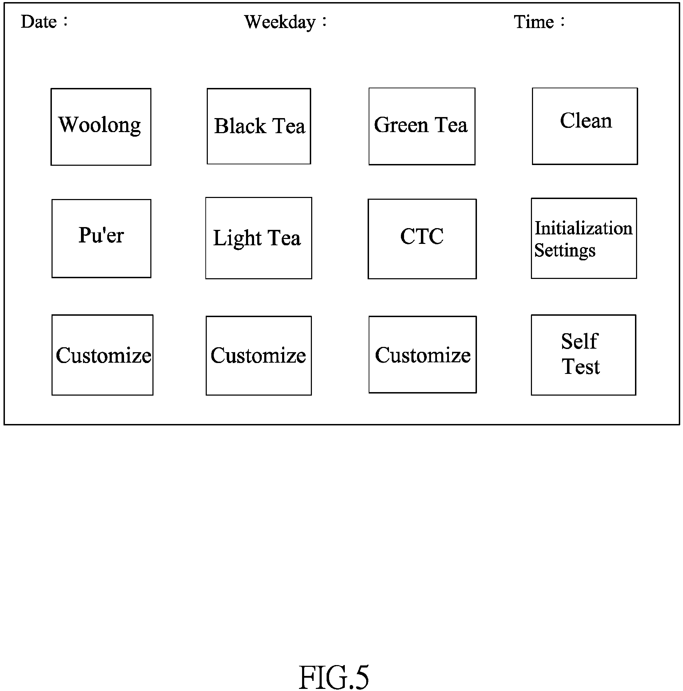

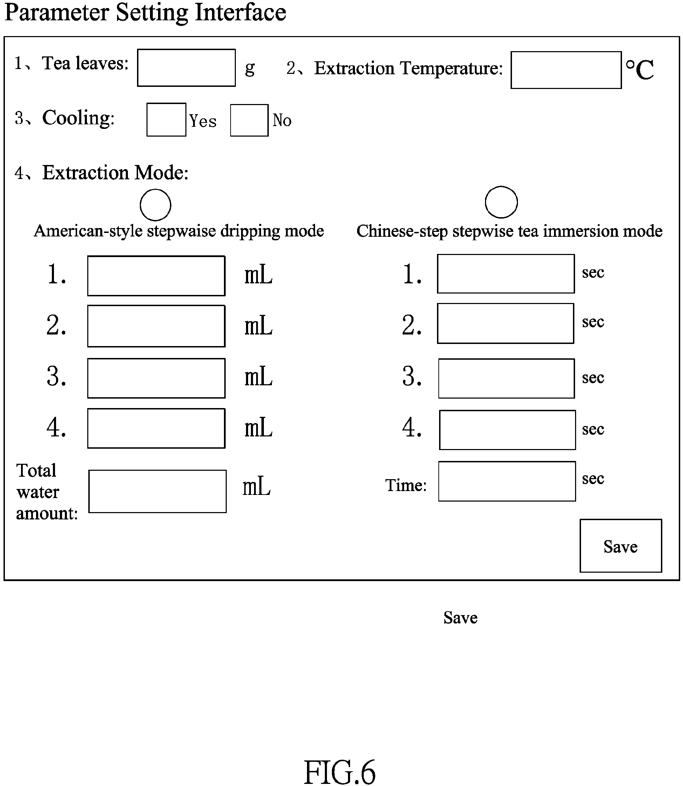

Specifically, the intelligent extraction beverage cooler further includes an intelligent operation panel 10 installed on the surface of the casing. The intelligent operation panel 10 includes a basic parameter setting module, an extraction setting module, and an automatic cleaning control module. The intelligent operation panel 10 has different operation interfaces. The interface of the basic parameter setting module is shown in FIG. 4. The basic parameter setting module is used to set a date, a machine number, a heating temperature, a cooling temperature, and a cooling time. The date refers to the initial year, month and day when the user starts using the machine. After the date is set, the machine automatically accumulates the date. The machine number is the factory serial number to effectively prevent counterfeiting. The heating temperature refers to the specified temperature value of the heating liquid in the heating cylinder 2, which has different values at different altitudes. The cooling temperature refers to the specified temperature value for the final production of iced beverages. If the iced beverage has a temperature higher than this specified temperature, the cooling system needs to circulate cooling. The cooling time refers to the beverage cooling time. The interface of the extraction setting module is shown in FIG. 5 and FIG. 6. The extraction setting module is used to set an ingredient bag type, an ingredient bag weight, an extraction temperature, and an extraction mode. The ingredient bag types include oolong tea bag, Pu'er tea bag, black tea bag, green tea bag, and other customized items. After selecting the ingredient bag type, the invention enters the interface shown in FIG. 6. The extraction temperature refers to the temperature at which the ingredient bag is immersed in the hot liquid. The extraction modes include an American-style stepwise dripping mode and a Chinese-style stepwise tea immersion mode. The automatic cleaning control module is used to control whether to enter the cleaning mode. In the cleaning mode, there is no need to wait for the extraction. Clean water flows in the heating cylinder 2, the hot liquid container 3, the cold liquid container 4, the cooling system, and the connecting pipes to remove the impurities.

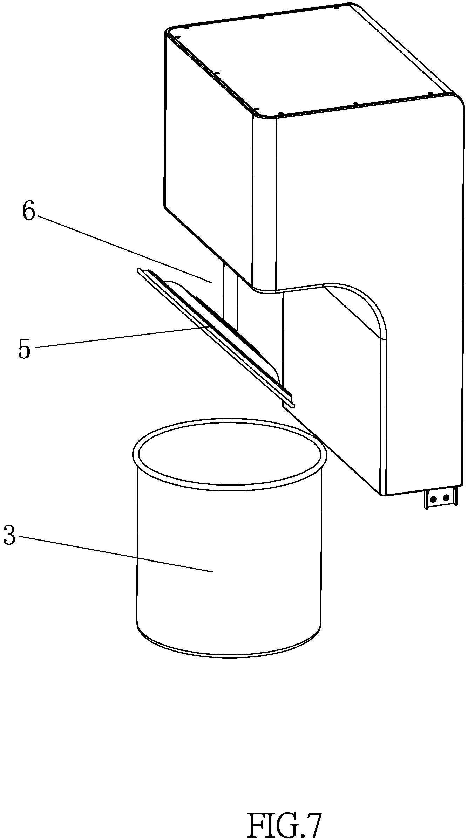

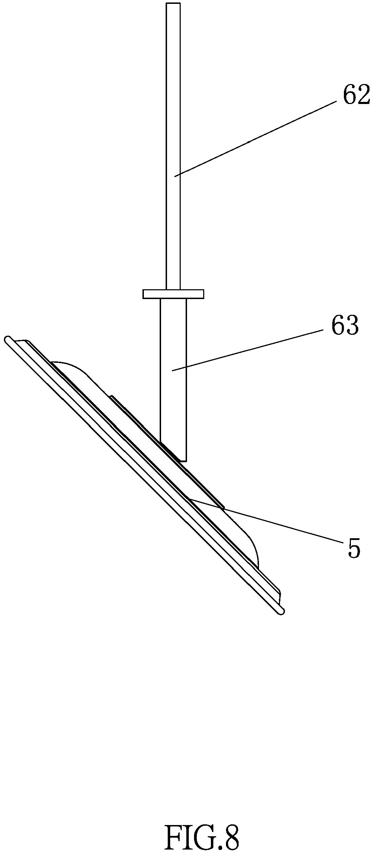

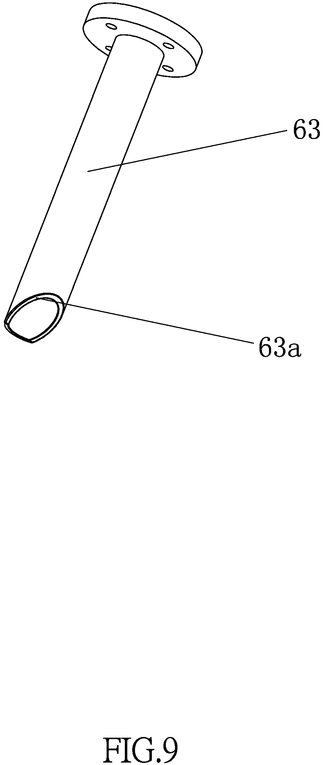

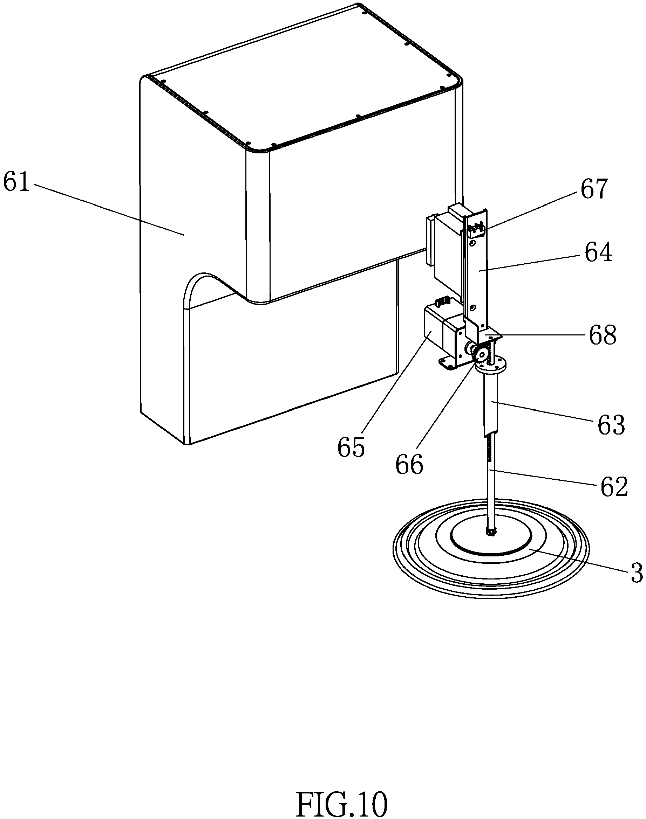

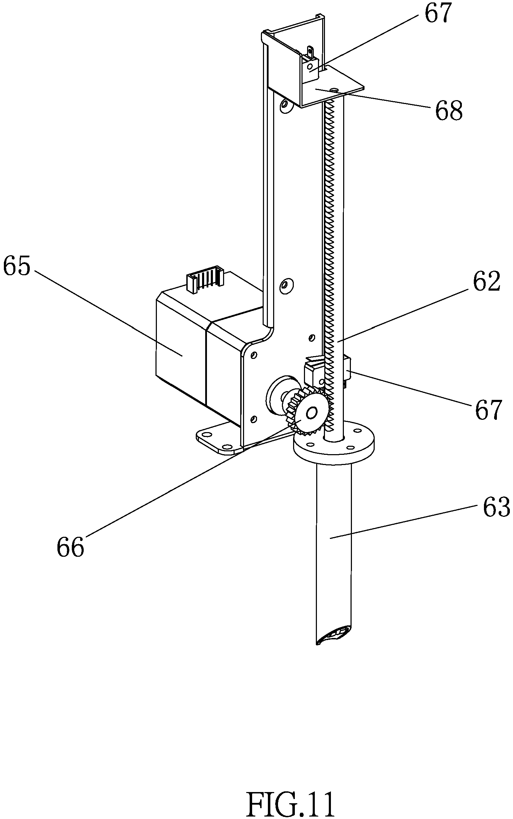

As shown in FIGS. 7 to 11, the pot lid lifting mechanism 6 includes a mounting shell 61, a connecting rod 62, a guide sleeve 63, a motor mounting plate 64, a motor 65 and a gear 66. The connecting rod 62 is hinged to the top of the pot cover 5. The connecting rod 62 is movably fitted in the guide sleeve 63, which is installed at the bottom of the mounting shell 61. The bottom of the guide sleeve 63 is provided with an inclined surface 63a. The motor mounting plate 64 is installed inside the mounting shell 61. The motor 65 is installed on one side of the motor mounting plate 64. The gear 66 is mounted on the output shaft of the motor. A gear-shaped groove matching the gear 66 is provided on one side of the upper end of the connecting rod 62. The upper end of the connecting rod 62 penetrates into the mounting shell 61 and engage the gear 66.

Specifically, the motor 65 drives the gear 66 to rotate, and the gear 66 drives the connecting rod 62 to move up and down. When the connecting rod 62 synchronously raises with the pot lid 5 to touch the guide sleeve 63, the pot lid 5 rotates a specific angle to lean tightly against the inclined surface 63a because of the hinge connection between the connecting rod 62 and the pot lid 5 and that the bottom of the guide sleeve 63 is provided with the inclined surface 63a, thereby increasing the distance from the top of the pot lid 5 to the opening of the hot liquid container. This is for the convenience of putting in ingredients and checking the inside of the container. The invention is thus practically convenient. Besides, a micro switch 67 is respectively installed on the upper and lower parts of the motor mounting plate 64. A limiting plate 68 is installed above the connecting rod 62. When the motor 65 drives the connecting rod 62 to reach the upper limit position, the limiting plate 68 touches the upper micro switch 67 to stop the rotation of the motor 65. When the motor 65 drives the connecting rod 62 to reach the lower limit position, the limiting plate 68 touches the lower micro switch 67 to stop the rotation of the motor 65. Such a mechanism prevents over movement of the connecting rod 62, resulting in precision positioning.

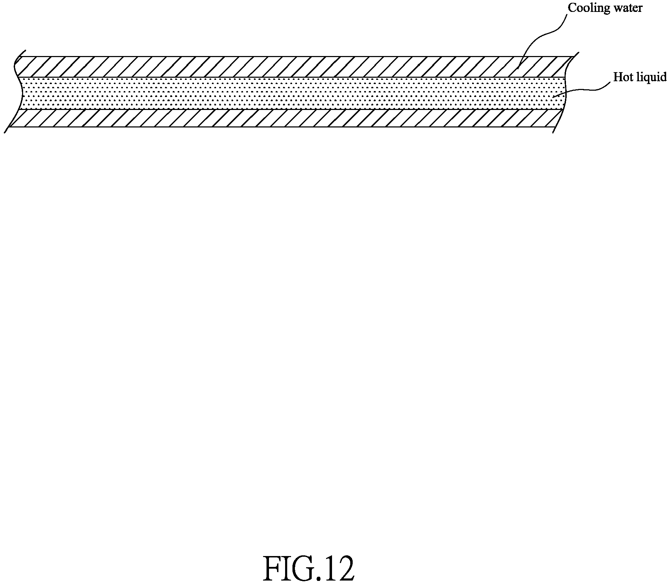

Specifically, the cooling system includes a cooling jacket 71 and a heat exchanger. The cooling jacket 71 is a double-layered tube structure, as shown in FIG. 12. The cooling jacket 71 is arranged in a disc shape. The inner tube of the cooling jacket 71 is used for transporting the hot beverage, and the outer tube thereof is used to transport cooling water. The cooling water cools the inner hot beverage once to form a cold beverage, which is sent to the cold liquid container through a connecting pipe. The cold liquid container is in fluid communications with the heat exchanger through a connecting pipe. The heat exchanger circulates to cool the cold liquid for the second time to form an iced beverage.

The heat exchanger is a common refrigeration heat exchange device used for cooling the cold beverage for the second time. The heat exchanger includes an air compressor 72, an evaporator 73, and a condenser 74. The air-conditioning refrigeration principle is employed to cool the beverages. A thermal expansion valve is preferred to be added to the pipeline, and the refrigerant can quickly return to low temperatures after the thermal expansion valve is throttled.

In order to better control the temperature and water level throughout the liquid transportation process, a water level probe and a temperature probe are respectively installed in the heating cylinder 2, the hot liquid container 3, and the cold liquid container 4.

More specifically, the heating cylinder transports the heated hot liquid to the hot liquid container and the ingredient bag. This is the American-style stepwise dripping extraction mode. In this embodiment, it is divided into 4 steps, and the amount of water in each step is set such that one obtains the desired total amount of water in the end. On the other hand, the pot lid lifting mechanism drives the ingredient bag to move up and down, thereby immersing the ingredient bag in hot liquid in steps for extraction. This is the Chinese-style stepwise tea immersion mode. In this embodiment, it is divided into 4 steps so that and the immersion time of each step is set to render a desired total time.

While the invention is described in some detail hereinbelow with reference to certain illustrated embodiments, it is to be understood that there is no intent to limit it to those embodiments. On the contrary, the aim is to cover all modifications, alternatives and equivalents falling within the spirit and scope of the invention as defined by the appended claims.

## Claims

1. An intelligent extraction beverage cooler, comprising a casing (1), a heating cylinder (2), a hot liquid container (3), a cold liquid container (4), a pot lid (5), a pot lid lifting mechanism (6), a cooling system and a plurality of connecting pipes all installed in the casing (1), wherein the heating cylinder (2) heats up a liquid and transports the heated liquid to the hot liquid container (3) via a connecting pipe; the top of the hot liquid container (3) is covered by the pot lid (5) whose bottom is hooked with an ingredient bag; the pot lid lifting mechanism (6) drives the pot lid to move up and down along with the ingredient bag, thereby immersing the ingredient bag into the hot liquid intermittently for a predetermined time to extract a hot beverage; and the hot beverage is cooled by the cooling system into an iced beverage output to the cold liquid container (4).

2. The intelligent extraction beverage cooler of claim 1 further comprising an intelligent operation panel (10) installed on the surface of the casing (1), wherein the intelligent operation panel (10) includes a basic parameter setting module, an extraction setting module, and an automatic cleaning control module; the basic parameter setting module is used to set a date, a machine number, a heating temperature, and a cooling temperature; the extraction setting module is used to set an ingredient bag type, an ingredient bag weight, and an extraction temperature; and the automatic cleaning control module is used to control whether to enter the cleaning mode.

3. The intelligent extraction beverage cooler of claim 1, wherein the pot lifting mechanism (6) includes a mounting shell (61), a connecting rod (62), a guide sleeve (63), a motor mounting plate (64), a motor (65) and a gear (66); the top of the pot lid (5) is hinged with the connecting rod (62), which is movably installed in the guide sleeve (63); the guide sleeve (63) is installed at the bottom of the mounting shell (61); the bottom of the guide sleeve (63) is provided with an inclined surface (63a); the motor mounting plate (64) is installed inside the mounting shell (61); the motor (65) is mounted on one side of the motor mounting plate (64). The gear (66) is mounted on the output shaft of the motor (65); the upper side of the connecting rod (62) is provided with a gear-shaped groove matching with the gear (66); the upper end of the connecting rod (62) penetrates into the mounting shell (61) to engage the gear (66); the motor (65) drives the pot lid (5) to rise with the help of the gear (66) and the connecting rod (62); and the surface of the pot lid (5) is in contact with the inclined surface (63a) to realize an inclined opening of the pot lid.

4. The intelligent extraction beverage cooler of claim 1 with the cooling system including a cooling jacket (71) and a heat exchanger, wherein the cooling jacket (71) has a double-layered tube structure, with the inner tube thereof used to transport hot beverages and the outer tube thereof used to transport cooling water; the cooling water cools the hot beverage in the inner tube once to form a cold beverage, which is sent to the cold liquid container (4) through one of the connecting pipes; the cold liquid container (4) is in fluid communications with the heat exchanger through one of the connecting pipes; and the heat exchanger circulates to cool the cold liquid for a second time to form an iced beverage.

5. The intelligent extraction beverage cooler of claim 4, wherein the heat exchanger includes an air compressor (72), an evaporator (73), and a condenser (74).

6. The intelligent extraction beverage cooler of claim 4, wherein the cooling jacket (71) is arranged in a disc shape.

7. The intelligent extraction beverage cooler of claim 1, wherein a water level probe and a temperature probe are respectively installed in the heating cylinder (71), the hot liquid container (3), and the cold liquid container (4).
